**Europäisches Patentamt**

(19) **European Patent Office**

**Office européen des brevets**

(11) Publication number : **0 624 283 B1**

(12) # EUROPEAN PATENT SPECIFICATION

(45) Date of publication of patent specification :
20.12.95 Bulletin 95/51

(51) Int. Cl.⁶ : **H01M 2/16,** B01D 67/00,
B01D 69/14

(21) Application number : **93901983.2**

(22) Date of filing : **27.01.93**

(86) International application number :
**PCT/BE93/00005**

(87) International publication number :
**WO 93/15529 05.08.93 Gazette 93/19**

(54) PREPARATION OF A MEMBRANE AND ITS USE IN AN ELECTROCHEMICAL CELL

(30) Priority : **29.01.92 BE 9200085**

(43) Date of publication of application :
**17.11.94 Bulletin 94/46**

(45) Publication of the grant of the patent :
**20.12.95 Bulletin 95/51**

(84) Designated Contracting States :
**BE DE DK FR GB IT NL**

(56) References cited :
**EP-A- 0 241 995**
**US-A- 4 253 936**
**INDUSTRIAL & ENGINEERING CHEMISTRY RESEARCH vol. 26, no. 1, 1987, WASHINGTON US pages 2385 - 2389 LUCIE Y. LAFRENIERE 'Effect of Polyvinylpyrrolidone Additive on the Performance of Polyethersulfone Ultrafiltration Membranes'**

(73) Proprietor : **"VLAAMSE INSTELLING VOOR TECHNOLOGISCH ONDERZOEK", afgekort "V.I.T.O."**
**Boeretang 200**
**B-2400 Mol (BE)**

(72) Inventor : **VERMEIREN, Philippe**
**Zyp 27**
**B-1810 Wemmel (BE)**
Inventor : **DOYEN, Willy**
**Kandonklaan 13**
**B-2220 Wommelgem (BE)**
Inventor : **ADRIANSENS, Walter**
**Boshoek 23**
**B-2400 Mol (BE)**
Inventor : **LEYSEN, Roger**
**Zwanenhof 14**
**B-2400 Mol (BE)**

(74) Representative : **Debrabandere, René**
**Bureau De Rycker nv**
**Arenbergstraat 13**
**B-2000 Antwerpen (BE)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The invention relates to a method for making a porous membrane, according to which method a suspension is made from a solution of an organic binding agent in a solvent and an amount of metal oxide and/or metal hydroxide, the suspension is brought into the desired shape by providing it on a support or by shaping techniques such as extrusion of spinning, and the solvent is removed by means of extraction through immersion in a non-solvent, this is a liquid which is not a solvent for the binding agent and the metal oxide and/or metal hydroxide.

A metal of this kind is disclosed in EP-A-0 241 995. According to this method a filtration membrane is prepared by dissolving a polysulfone in a solvent and adding zirconium oxide. The mixture is cast and the solvent is removed by submerging the mixture in a water bath and subsequently in a bath containing a boiling mixture of glycerine and water.

By removing the solvent by means of water, an asymetrical structure with finger-like pores is obtained. This structure seems to be the consequence of the speed at which the solvent is removed by the water. Such finger-like pores are excellent for filtration membranes.

It is clear that with asymmetric membranes with finger-like pores, the gas tightness when saturated with electrolyte is not always guaranteed. With the useable thicknesses of the membranes in for example electrochemical cells, one or more pores can extend crosswise through the membrane. Also when welding, the membranes in for example an electrochemical cell structure or when the surface is damaged, gas leaks may occur in membranes made according to above mentioned known method whith water as non-solvent.

The invention aims to remedy said disadvantage and to provide a method for making a memrane of the type mentioned in the first paragraph, but according to which a symmetrical membrane can be obtained which does not only have the required pore structure but also the required conductivity and gastightness when saturated with electrolyte, such that the membrane can be used in electrochemical cells.

To this aim, an organic non-solvent is used instead of water to extract the solvent.

By using an organic non-solvent instead of water, another symmetrical porous structure is obtained. The obtained membrane can be used a separator in an electrochemical cell.

The influence of the non-solvent on the structure is known as such but in ultrafiltration membranes comprising no metal oxide. This influence is described amongst others in "Pore Size Control Technique in the Spinning of Polysulfone Hollow Fiber Ultrafiltration Membranes" as appeared in Publishers). A solution of polysulfone in N-methyl-pyrrolidone was immersed in various non-solvents, also called coagulants. Hereby it was clear that with water being used as non-solvent, finger-like pores were obtained, whereas when other non-solvents such as ethanol were used for the immersion, but in particular isopropyl alcohol, a fine symmetrical pore structure was obtained.

According to a practical embodiment of the invention, zirconium oxide is used as metal oxide.

According to a special embodiment of the invention, alcohol is used as organic non-solvent.

Practically, isopropyl alcohol is used as organic non-solvent.

According to a peculiar embodiment of the invention, an amount of pore-forming material is added to the mixture.

The addition of such a material promotes the pore formation. Among others in the skin formed on the outside of the membrane, which is denser than the core, a relatively large amount of pores and a very good conductivity are obtained when the membrane is saturated with electrolyte.

In particular, an amount of polyvinyl pyrrolidone is added as pore-forming material.

According to a practical embodiment, a certain amount of zinc oxide is added as pore-forming material.

The invention does not only concern the above-described method, but also the membrane obtained according to this method.

As mentioned above, the membrane has a typical pore structure, but also a very high conductivity.

The invention also concerns an electrochemical cell containing such a membrane.

The membrane is particularly suited for alkaline cells, in particular as a gastight separator, filled with electrolyte, between the electrodes.

Other particularities and advantages of the invention will become clear from the following description of a method for making a membrane, of a membrane made in this way and of an electrochemical cell with such a membrane according to the invention. This description is given as an example only without being limitative in any way.

To make a non-reinforced membrane with a symmetrical structure suited for electrochemical cells, a suspension of zirconium oxide is prepared in a solution of a binding agent in a solvent, this suspension is provided on a support and the solvent is removed, after which the membrane is removed from the support.

To make the suspension, a solution of a polymer binding agent such as polysulphone is first prepared in

2

a solvent such as 1- or N-methyl-2-pyrrolidone, for example in a proportion of 10 to 30 percent by weight binding agent in relation to the amount of solvent.

Preferably, at least an additive is added to this suspension which advances the pore formation. Polyvinyl pyrrolidone is a suitable pore-forming material whereby a suitable amount lies between 0.5 and 2 percent by weight, for example 0.7 percent by weight of the entire composition. This pore-forming material is first solved in the solvent, after which the polymer binding agent is added to the formed solution, preferably at an increased temperature, for example at 70 to 75 degrees Celsius. This pore-forming material provides pores in the skin on the outer sides of the formed membrane. Mixing is required for 15 to 20 minutes, after which the air is expelled for 15 to 20 minutes by means of a vacuum pump during soft mixing.

This solution is put in a previously cleaned ball mill and the zirconium oxide is added to it, preferably with a weight ratio of 65/35 to 95/5 in relation to the amount of polysulphone.

After the zirconium oxide has been broken and the thorough mixing is finished, the suspension is poured out of the ball mill with an excess pressure of 1 bar by means of compressed air through a filter with meshes of 0.09 mm. In order to facilitate the pouring, the ball mill can be heated, for example to a temperature of some 50 degrees Celsius.

By means of a pouring device of which the glass base has been cleaned and degreased, a layer of 800 to 1,000 micrometer of the suspension is applied onto the glass plate.

In order to remove the solvent from the suspension layer, the glass plate with the layer is immersed in an organic non-solvent such as alcohol, preferably at room temperature. Suitable types of alcohol are ethanol, but especially isopropyl alcohol. Usually, an immersion time of 20 to 40 minutes is sufficient. The major part of the solvent and the organic pore-forming additive are extracted in the non-solvent.

The obtained membrane is removed from the glass plate and the remaining solvent is removed by immersing the membrane in a water bath for several hours.

Finally, the membrane is boiled three times in demineralized water, whereby in between each boiling the water is freshened and the membrane is rinsed with tepid water of about 40 degrees Celsius.

The thus obtained membrane can be cut at the desired sizes.

Due to the extraction of the solvent in a non-solvent, in particular isopropyl alcohol, whereby said extraction takes place at a specific speed, a special structure is obtained for the membrane, with relatively fine pores. The outer layers of the membrane are denser, but nevertheless have suitable pores, especially as a result of the addition of polyvinyl pyrrolidone.

If the pore-forming additive is an anorganic substance, this must be extracted later on in an anorganic acid or base.

The membrane can be made in a shape other than the shape of the plate, such as a tube shape. Hereby the membrane can be re-shaped, after being formed in the shape of a flat plate on a support, but it can also be directly formed in another shape, even without the use of a support. The mixture of the solution of the organic binding agent and the zirconium oxide can be directly brought in the desired shape in the non-solvent, for example by means of a spinning machine or by means of extrusion.

The invention will be further specified by means of the following examples:

Example 1:

In a mixing device (High Speed Dissolver Pendraulik TD.100.5) with a 3-litre blender connected to a vacuum pump (VERDER, type N726 FTE) were put 1640 g of 1-methyl-2-pyrrolidone (Janssen Chimica 14.932.91) and subsequently 24.1 g of polyvinyl pyrrolidone (Janssen Chemica 016228) and mixed at 1,200 revs/min. for 20 minutes.

360 g polysulphone (Amoco Chemicals Udel P 1800 NT 11) were added to the blender and also mixed at 2,000 revs/min. for 18 minutes.

The mixing was continued at a lower stirring speed (465 revs/min.) while the air was expelled for 18 minutes by means of a vacuum pump.

The thus obtained yellow, viscous solution which had a temperature of 70 to 75 degrees Celsius and which was free of air bells was caught in a bottle.

The previous stages were repeated twice and the solutions were homogeneously mixed in the bottle by placing it on a roller bench.

A ball mill with a volume of 15 litres and an inner diameter of 260 mm was loaded for about 30% with steatite balls, namely 3 kg with 6 mm diameter, 3 kg with 10 mm diameter and 4 kg with 20 mm diameter. The ball mill as well as the balls were thoroughly cleaned beforehand, first with the solvent and subsequently with water and then rinsed with ethyl alcohol and dried, the balls in an oven and the ball mill by means of compressed air.

To the ball mill with balls were successively added 3516.2 g zirconium oxide and 4942.5 g of the above-mentioned viscous solution from the bottle.

The ball mill was sealed and placed on a roller bench (KERA R3/ET/VAR 122) and activated for 160 hours with a rotation speed of 43 revs/min.

Next, the ball mill was heated in a water bath with a temperature of about 50 degrees Celsius for 3 hours so as to advance the pouring out. The content of the ball mill was then poured into a bottle which was placed on said roller bench until the following treatment.

This following treatment implied a filtration through a woven nylon net with meshes of 0.09 mm by means of compressed air with an excess pressure of 1 bar. The filtered suspension was put in a bottle and de-aerated for 30 minutes by means of a vacuum pump. This bottle was then placed on the above-mentioned roller bench for 5 minutes after which the content of the bottle was slowly brought under atmospheric pressure again.

A layer of the suspension was casted by means of a casting installation whose glass base had been cleaned with denaturated ethanol and whose palette knife had been set at 900 micrometer above the glass base.

After the casting the glass base with the layer was immersed in a tank filled with 15 litres of isopropyl alcohol (100%) at room temperature for 30 minutes.

The obtained membrane was removed from the glass base and immersed in a tank filled with 1,000 litres of demineralized water with a conductivity between 0.25 and 0.65 microsiemens/cm$^2$ and 10 litres of aqueous solution of formaldehyde of 37% for 16 hours.

Finally, the membrane was boiled in three stages of 10 minutes, 10 minutes and 60 minutes respectively in a boiling tank filled with 38 litres of demineralized water. After each stage, the water was freshened and the membrane was rinsed with tepid water of 40 degrees Celsius.

The obtained membrane was cut up to smaller membranes with the required dimensions. These membranes were visually checked by means of an inspection light. The approved membranes were kept in a storage tank filled with 45 litres of demineralized water and 0.45 litres of aqueous solution of formaldehyde of 37%.

Example 2.

In a mixing device (High Speed dissolver pendraulik TO.100.5) with a 3-litre blender connected to a vacuum pump (VERDER, type N726 FTE) were put 450 g of N-methyl-2-pyrrolidone (Janssens Chimica 14.932.91) and subsequently 150 g of polysulphone (Amoco Chemicals udel P 1800 NT 11) and mixed at 2,000 revs/min. for 18 minutes.

The mixing was continued at a lower stirring speed (465 revs/min.) while the air was expelled for 18 minutes by means of a vacuum pump.

The thus obtained yellow, viscous solution which had a temperature of 70 to 75 degrees Celsius and which was free of air bells was caught in a bottle.

In the same mixing device, 492.4 g of the suspension obtained from the above-described stage and 228.6 g Zirconium oxide were mixed at 2,000 revs/min. in a 3-litre blender for 30 minutes; the mixing was continued at a lower stirring speed (1,000 revs/min.) while the air was expelled for 10 minutes by means of a vacuum pump.

The thus obtained suspension (56 degrees Celsius) was filtered through a woven nylon net with meshes of 0.09 mm without the help of compressed air. The filtered suspension was put in a bottle and de-aerated for 30 minutes by means of a vacuum pump.

This bottle was then placed on the above-mentioned roller bench for 5 minutes after which the content of the bottle was slowly brought under atmospheric pressure again.

A layer of the suspension was casted by means of a casting installation whose glass base had been cleaned with denaturated ethanol and whose palette plate had been set at 670 micrometer above the glass base.

After the casting the glass base with the layer was immersed in a tank filled with 15 litres of isopropyl alcohol (100%) at room temperature for 30 minutes.

The obtained layer was cut up to membranes with the required dimensions. These membranes were visually checked by means of an inspection light. The approved membranes were kept in a storage tank filled with 45 litres of demineralized water and 0.45 litres of aqueous solution of formaldehyde of 37%.

Example 3.

In a mixing device (High Speed dissolver pendraulik TO.100.5) with a 3-litre blender connected to a vacuum pump (Verder, type N726 FTE) were put 480 g of N-methyl-2-pyrrolidone (Janssens Chimica 14.932.91) and subsequently 120 g of polysulphone (Amoco Chemicals udel P 1800 NT 11) and mixed at 2,000 revs/min. for 18 minutes.

The mixing was continued at a lower stirring speed (465 revs/min.) while the air was expelled for 18 minutes by means of a vacuum pump.

The thus obtained yellow, viscous solution which had a temperature of 70 to 75 degrees Celsius and which was free of air bells was caught in a bottle.

In the same mixing device, 477 g of the suspension obtained from the above-described stage and 286.2 g Zirconium oxide were mixed at 2,000 revs/min. in a 3-litre blender for 30 minutes; the mixing was continued at a lower stirring speed (1,000 revs/min.) while the air was expelled for 10 minutes by means of a vacuum pump.

The thus obtained suspension (56 degrees Celsius) was filtered through a woven nylon net with meshes of 0.09 mm without the help of compressed air. The filtered suspension was put in a bottle and de-aerated for 30 minutes by means of a vacuum pump.

This bottle was then placed on the above-mentioned roller bench for 5 minutes after which the content of the bottle was slowly brought under atmospheric pressure again.

A layer of the suspension was casted by means of a casting installation whose glass base had been cleaned with denaturated ethanol and whose palette plate had been set at 670 micrometer above the glass base.

After the casting the glass base with the layer was immersed in a tank filled with 15 litres of isopropyl alcohol (100%) at room temperature for 30 minutes.

The obtained layer was cut up to membranes with the required dimensions. These membranes were visually checked by means of an inspection light. The approved membranes were kept in a storage tank filled with 45 litres of demineralized water and 0.45 litres of aqueous solution of formaldehyde of 37%.

Example 4.

In a mixing device (High Speed dissolver pendraulik TO.100.5) with a 3-litre blender connected to a vacuum pump (Verder, type N726 FTE) were put 425 g of N-methyl-2-pyrrolidone (Janssens Chimica 14.932.91) and 75 g of polysulphone (Amoco Chemicals udel P 1800 NT 11) and mixed at 2,000 revs/min. for 18 minutes.

The mixing was continued at a lower stirring speed (465 revs/min.) while the air was expelled for 18 minutes by means of a vacuum pump.

The thus obtained yellow, viscous solution which had a temperature of 70 to 75 degrees Celsius and which was free of air bells was caught in a bottle.

In the same mixing device, 454 g of the suspension obtained from the above-described stage and 385.9 g Zirconium oxide were mixed at 2,000 revs/min. in a 3-litre blender for 30 minutes; the mixing was continued at a lower stirring speed (1,000 revs/min.) while the air was expelled for 10 minutes by means of a vacuum pump.

The thus obtained suspension (56 degrees Celsius) was filtered through a woven nylon net with meshes of 0.09 mm without the help of compressed air. The filtered suspension was put in a bottle and de-aerated for 30 minutes by means of a vacuum pump.

This bottle was then placed on the above-mentioned roller bench for 5 minutes after which the content of the bottle was slowly brought under atmospheric pressure again.

A layer of the suspension was casted by means of a casting installation whose glass base had been cleaned with denaturated ethanol and whose palette plate had been set at 540 micrometer above the glass base.

After the casting the glass base with the layer was immersed in a tank filled with 15 litres of isopropyl alcohol (100%) at room temperature for 30 minutes.

The obtained layer was cut up to membranes with the required dimensions. These membranes were visually checked by means of an inspection light. The approved membranes were kept in a storage tank filled with 45 litres of demineralized water and 0.45 litres of aqueous solution of formaldehyde of 37%.

Example 5.

In a mixing device (High Speed dissolver pendraulik TO.100.5) with a 3-litre blender connected to a vacuum pump (Verder, type N726 FTE) were put 425 g of N-methyl-2-pyrrolidone (Janssens Chimica 14.932.91) and 75 g of polysulphone (Amoco Chemicals udel P 1800 NT 11) and mixed at 2,000 revs/min. for 18 minutes.

The mixing was continued at a lower stirring speed (465 revs/min.) while the air was expelled for 18 minutes by means of a vacuum pump.

The thus obtained yellow, viscous solution which had a temperature of 70 to 75 degrees Celsius and which was free of air bells was caught in a bottle.

In the same mixing device, 385.6 g of the suspension obtained from the above-described stage and 732.4 g Zirconium oxide were mixed at 2,000 revs/min. in a 3-litre blender for 30 minutes; the mixing was continued at a lower stirring speed (1,000 revs/min.) while the air was expelled for 10 minutes by means of a vacuum pump.

The thus obtained suspension (56 degrees Celsius) was filtered through a woven nylon net with meshes of 0.09 mm without the help of compressed air. The filtered suspension was put in a bottle and de-aerated for 30 minutes by means of a vacuum pump.

This bottle was then placed on the above-mentioned roller bench for 5 minutes after which the content of the bottle was slowly brought under atmospheric pressure again.

A layer of the suspension was casted by means of a casting installation whose glass base had been cleaned with denaturated ethanol and whose palette plate had been set at 540 micrometer above the glass base.

After the casting the glass base with the layer was immersed in a tank filled with 15 litres of isopropyl alcohol (100%) at room temperature for 30 minutes.

The obtained layer was cut up to membranes with the required dimensions. These membranes were visually checked by means of an inspection light. The approved membranes were kept in a storage tank filled with 45 litres of demineralized water and 0.45 litres of aqueous solution of formaldehyde of 37%.

The influence from the proportion of zirconium oxide on polysulphone can be derived from the examples 2 to 5. The more zirconium oxide the lower the resistance, as shown in the following table.

|  | % $ZrO_2$/% polysulphone | Ion resistance in 6N KOH at room temperature ($Ohm.cm^2$) |
|---|---|---|
| Example 2 | 36/35 | 3.46 |
| Example 3 | 75/25 | 1.02 |
| Example 4 | 85/15 | 0.27 |
| Example 5 | 95/5 | 0.12 |

Example 6.

In a mixing device (High Speed Dissolver Pendraulik TD.100.5) with a 3-litre blender connected to a vacuum group (VERDER, type N725 FTE) were put 1,045.6 g of 1-methyl-2-pyrrolidone (Janssen Chimica 14.932.91) and subsequently 199.2 g of polysulphone (Amoco Chemicals udel P 1800 NT11). These products were mixed at approx. 2,000 revs/min. for 20 minutes.

A mixture of 896.2 g ZnO (type Aldrich) and 896.2 g $ZrO_2$ (type MEL E101) were added at a lower stirring speed (approx. 1,000 revs/min.) and mixed for 1 hour. The final temperature of this suspension amounted to approx. 100 °C.

This suspension was put in a bottle and de-aerated for 5 minutes by means of a vacuum pump.

This bottle was then placed on a roller bench for 30 minutes at a rotation speed of 5 revs/min. After having stood on the roller bench for 30 minutes, the bottle was slowly brought under atmospheric pressure again.

A layer of the suspension was casted by means of a casting installation whose glass base had been cleaned with denaturated ethanol and whose palette knife had been set at 460 micrometer above the glass base.

After the casting the glass base with the layer was immersed in a tank filled with 15 litres of isopropyl alcohol (100%) at room temperature for 30 minutes. After having been rinsed with water, the membrane was subsequently immersed in 6 M HC1 at room temperature for 1 hour.

Next, the membrane was immersed in water. This water was freshened until a pH value of 7 was reached.

The membranes obtained according to the above-described method can be used as separators in electrochemical cells and in particular in alkaline cells. For the membranes are sufficiently porous to be able to contain electrolyte, but entirely gastight when saturated with electrolyte. The gas separation is sufficient, so that the membranes can be used in electrolysis cells; however, a very suitable application is in alkaline cells such as a dry manganese dioxide-zinc cell, a hydrogen-oxygen cell, a hydrogen-air cell or a nickel-hydrogen cell. The membrane is saturated with potassium hydroxide and mounted immediately next to the cathode, as a coating thereof, in the cell. The electrolyte can also be added after the assembly.

The use of a membrane made according to example 1 as a separator in an oxygen-hydrogen fuel cell with 6N KOH as electrolyte at 95 degrees Celsius provided a stable operation for more than 200 hours.

According to the above-described method, the pores are distributed relatively evenly and the risk of gas leaks, for example when welding a membrane in a cell or in case of other damages to the surface of the membrane, is considerably smaller than with membranes obtained according to other methods.

The invention is in no way limited to the embodiments described above and, within the scope of the patent application, many modifications can be made to these embodiments.

## Claims

1. Method for making a porous membrane, according to which method a suspension is made from a solution of an organic binding agent in a solvent and an amount of metal oxide and/or metal hydroxide, the suspension is brought into the desired shape by providing it on a support or by shaping techniques such as extrusion or spinning, and the solvent is removed by means of extraction through immersion in a non-solvent, this is a liquid which is not a solvent for the binding agent and the metal oxide and/a metal hydroxide, characterized in that an organic non-solvent is used instead of water to extract the solvent.

2. Method according to the preceding claim, characterized in that zirconium oxide is used as metal oxide.

3. Method according to any one of the preceding claims, characterized in that a type of alcohol is used as organic non-solvent.

4. Method according to the preceding claim, characterized in that isopropylalcohol is used as organic non-solvent.

5. Method according to any one of the preceding claims, characterized in that the pore-forming material is added to the suspension, which pore forming material is extracted after putting the suspension into the desired shape.

6. Method according to any one of the preceding claims, characterized in that the polyvinyl pyrrolidone is added as pore-forming material.

7. Method according to any one of claims 1 to 5, characterized in that an amount of zinc oxide is added as pore-forming material.

8. Method according to any one of the preceding claims, characterized in that polysulphone is used as binding agent.

9. Method according to any one of the preceding claims, characterized in that 1- or N-methyl-2-pyrrolidone is used as solvent.

10. Method according to any one of the preceding claims, characterized in that metal oxide and/or metal hydroxide is added in a weight proportion between 65/35 and 95/5 in relation to the organic binding agent.

11. Membrane made according to the method of any of the preceding claims.

12. Electrochemical cell containing a membrane between two electrodes, characterized in that the membrane is made according to the method of any one of claims 1 to 10.

13. Electrochemical cell according to the preceding claim, characterized in that it is an alkaline cell and in that the membrane is saturated with electrolyte and thus forms a separator between two electrodes.

## Patentansprüche

1. Verfahren zur Herstellung einer porösen Membran, gemäß welchen Verfahrens eine Suspension aus einer Lösung eines organischen Bindemittels in einem Lösungsmittel und einer Quantität von Metalloxid und/oder Metallhydroxid hergestellt wird, die Suspension in die gewünschte Form gebracht wird, indem sie auf einen Träger aufgebracht wird, oder durch Formtechniken wie etwa Extrusion oder Zentrifugieren, und das Lösungsmittel mittels Extraktion durch Eintauchen in ein Nicht-Lösungsmittel entfernt wird, dies ist eine Flüssigkeit, die kein Lösungsmittel für das Bindemittel und das Metalloxid und/oder Metallhydroxid darstellt, dadurch gekennzeichnet, daß ein organisches Nicht-Lösungsmittel statt Wasser zum Extrahieren des Lösungsmittels verwendet wird.

2. Verfahren gemäß dem vorgenannten Anspruch, dadurch gekennzeichnet, daß Zirkoniumoxid als Metalloxid verwendet wird.

3. Verfahren gemäß irgendeinem der vorgenannten Ansprüche, dadurch gekennzeichnet, daß ein Typ Alkohol als organisches Nicht-Lösungsmittel verwendet wird.

4. Verfahren gemäß dem vorgenannten Anspruch, dadurch gekennzeichnet, daß Isopropylalkohol als organisches Nicht-Lösungsmittel verwendet wird.

5. Verfahren gemäß irgendeinem der vorgenannten Ansprüche, dadurch gekennzeichnet, daß das porenbildende Material der Suspension zugesetzt wird, welches porenbildende Material extrahiert wird, nachdem die Suspension in die gewünschte Form gebracht wurde.

6. Verfahren gemäß irgendeinem der vorgenannten Ansprüche, dadurch gekennzeichnet, daß das Polyvinylpyrrolidon als porenbildendes Material zugesetzt wird.

7. Verfahren gemäß irgendeinem der Ansprüche 1 bis 5, dadurch gekennzeichnet, daß eine Quantität Zinkoxid als porenbildendes Material zugesetzt wird.

8. Verfahren gemäß irgendeinem der vorgenannten Ansprüche, dadurch gekennzeichnet, daß Polysulfon als Bindemittel verwendet wird.

9. Verfahren gemäß irgendeinem der vorgenannten Ansprüche, dadurch gekennzeichnet, daß 1- oder N-Methyl-2-Pyrrolidon als Lösungsmittel verwendet wird.

10. Verfahren gemäß irgendeinem der vorgenannten Ansprüche, dadurch gekennzeichnet, daß Metalloxid und/oder Metallhydroxid in einer Gewichtsproportion zwischen 65/35 und 95/5 in Bezug auf das organische Bindemittel verwendet wird.

11. Membran, hergestellt gemäß dem Verfahren irgendeines der vorgenannten Ansprüche.

12. Elektrochemische Zelle, enthaltend eine Membran zwischen zwei Elektroden, dadurch gekennzeichnet, daß die Membran gemäß dem Verfahren irgendeines der Ansprüche 1 bis 10 hergestellt ist.

13. Elektrochemische Zelle gemäß dem vorgenannten Anspruch, dadurch gekennzeichnet, daß sie eine alkalische Zelle ist und daß die Membran mit Elektrolyt gesättigt ist und somit einen Separator zwischen zwei Elektroden bildet.

## Revendications

1. Procédé pour fabriquer une membrane poreuse, conformément auquel on prépare une suspension à partir d'une solution d'un agent liant organique dans un solvant et d'une quantité d'oxyde métallique et/ou d'hydroxyde métallique, on amène la suspension à la forme désirée en la déposant sur un support ou encore à l'intervention de techniques de façonnement telles que l'extrusion ou le filage, et on élimine le solvant au moyen d'une extraction par immersion dans un non-solvant, c'est-à-dire un liquide qui n'est pas un solvant pour l'agent liant et pour l'oxyde métallique et/ou l'hydroxyde métallique, caractérisé en ce qu'on utilise un non-solvant organique à la place d'eau pour extraire le solvant.

2. Procédé selon la revendication précédente, caractérisé en ce qu'on utilise de l'oxyde de zirconium comme oxyde métallique.

3. Procédé selon l'une quelconque des revendications précédentes, caractérisé en ce qu'on utilise un type d'alcool comme non-solvant organique.

4. Procédé selon la revendication précédente, caractérisé en ce qu'on utilise l'alcool isopropylique comme non-solvant organique.

5. Procédé selon l'une quelconque des revendications précédentes, caractérisé en ce qu'on ajoute la matière formatrice de pores à la suspension, ladite matière formatrice de pores étant soumise à une extraction après avoir amené la suspension à la forme désirée.

6. Procédé selon l'une quelconque des revendications précédentes, caractérisé en ce qu'on ajoute de la polyvinylpyrrolidone comme matière formatrice de pores.

7. Procédé selon l'une quelconque des revendications 1 à 5, caractérisé en ce qu'on ajoute une quantité d'oxyde de zinc comme matière formatrice de pores.

8. Procédé selon l'une quelconque des revendications précédentes, caractérisé en ce qu'on utilise une polysulfone comme agent liant.

9. Procédé selon l'une quelconque des revendications précédentes, caractérisé en ce qu'on utilise la 1- ou N-méthyl-2-pyrrolidone comme solvant.

10. Procédé selon l'une quelconque des revendications précédentes, caractérisé en ce qu'on ajoute l'oxyde métallique et/ou l'hydroxyde métallique dans une proportion pondérale entre 65/35 et 95/5 par rapport à l'agent liant organique.

11. Membrane réalisée conformément au procédé selon l'une quelconque des revendications précédentes.

12. Pile électrochimique contenant une membrane entre deux électrodes, caractérisée en ce que la membrane est réalisée conformément au procédé selon l'une quelconque des revendications 1 à 10.

13. Pile électrochimique selon la revendication précédente, caractérisée en ce qu'il s'agit d'une pile alcaline et en ce que la membrane est saturée avec un électrolyte et forme ainsi une séparation entre deux électrodes.